# EUROPEAN PATENT SPECIFICATION

(11) **EP 1 723 460 B1**
(45) Date of publication and mention of the grant of the patent: **16.07.2014**
(21) Application number: 05713179.9
(22) Date of filing: 09.02.2005
(51) Int. Cl.: G02B 26/08, B81B 3/00

(54) **MEMS SCANNER ADAPTED TO A LASER PRINTER**
FÜR EINEN LASERDRUCKER AUSGELEGTER MEMS-SCANNER
SCANNEUR DE SYSTEMES MICROELECTROMECANIQUES CONCU POUR IMPRIMANTE LASER

(30) Priority: 09.02.2004 US 542896 P
(43) Date of publication of application: 22.11.2006
(73) Proprietor: Microvision, Inc., Redmond, WA 98052 (US); Seiko Epson Corporation, Suwa-shi, Nagano-ken (JP)
(72) Inventor: SPRAGUE, Randall, B., Carnation, WA 98014-9715 (US); DAVIS, Wyatt, O., Bothell, WA 98021-3527 (US); BROWN, Dean, R., Lynnwood, WA 98037-4940 (US); KOGA, Yoshiro, Nagano-ken 399-0744 (JP); ABE, Nobumasa, Nagano-ken 399-0001 (JP); NOMURA, Yujiro, Nagano-ken 399-0716 (JP)
(74) Representative: Dendorfer, Claus
(86) International application number: PCT/US2005/004066
(87) International publication number: WO 2005/078507

(56) References cited:
- EP-A1- 1 553 752
- US-A- 6 107 115
- US-A1- 2003 053 156
- US-A1- 2003 072 066
- US-A1- 2004 008 400
- US-B1- 6 360 035
- US-B1- 6 672 732

## Description

### CROSS REFERENCES TO RELATED APPLICATIONS

This application claims benefit from the co-pending US Provisional Patent Application serial number 60/542,896, entitled MEMS SYSTEM ADAPTED TO A LASER PRINTER, invented by Wyatt O. Davis et al., applied for on 9 February 2004.

This application relates to material in the co-pending US Patent Applications entitled HIGH PERFORMANCE MEMS SCANNER, invented by Wyatt O. Davis et al., Application Serial Number 10/986,640, applied for on 12 November 2004; METHOD AND APPARATUS FOR MAKING A MEMS SCANNER, invented by Kelly D. Linden et al., Application Serial Number 10/986,635, applied for on 12 November 2004; and METHOD AND APPARATUS FOR SCANNING A BEAM OF LIGHT, invented by Gregory T. Gibson et al., Application Serial Number 10/988,155, applied for on 12 November 2004.

### FIELD OF THE DISCLOSURE

The present invention relates to microelectromechanical system (MEMS) scanners and particularly to their application to laser printers.

### BACKGROUND

Electrophotographic, computer controlled printers have become pervasive in the office, factory, print shop, copy center, and home. An electrophotographic printer operates by transferring toner to plain paper and fusing the toner by means of heat, pressure, and/or other fixing technologies. The pattern of the transferred toner may form characters, graphic images, etc.

The term electrophotography refers to the use of modulated light, frequently a scanned laser beam, to create an electrostatic latent image on a photoconductive carrying medium such as a drum or belt. The latent electrostatic image is formed by momentary electrical conductivity of the photoconductor in response to exposure to the modulated light. The momentary conductivity allows a surface charge to discharge through the photoconductor to a conductor held at a bias voltage at locations corresponding to the modulated light exposure.

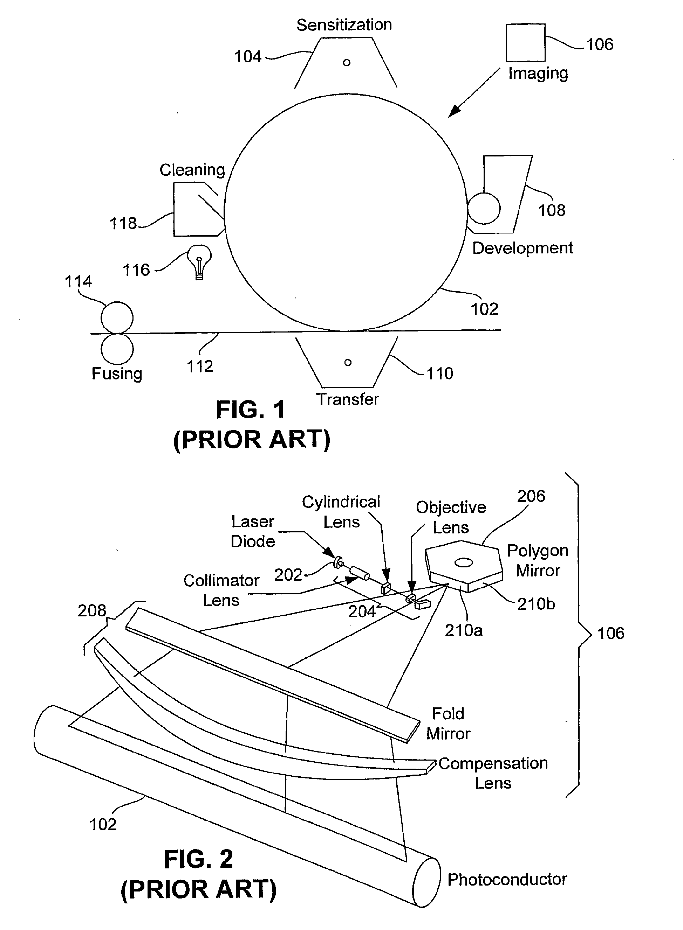

Figure 1 is a diagram illustrating the principal features of an electrophotographic printer. A photoconductive drum 102 is rotated past a charging or sensitization station 104 that deposits a static charge substantially uniformly over the surface of the drum 102. An imaging module 106 modulate light selectively over the surface of the photoconductor 102. This causes the static charge in those spots receiving light to discharge through the photoconductive layer to a conductive layer on the backside of the photoconductor surface. The pattern of discharged and non-discharged spots is referred to as a latent electrostatic image or latent image.

Electrophotographic printers may be made to write-white or write-black. In a write-black system, the toner charge is selected to be attracted to the photoconductor backside conductive layer bias voltage and repelled from the sensitization static charge deposited on the photoconductor surface. Thus, the spots "written" by the modulated light correspond to black areas of the printed page.

Once the electrostatic latent image is formed, the photoconductor 102 is further rotated to a developer 108, where oppositely charged toner, most often in the form of fine, dry particles, is attracted to and deposited on the surface of the photoconductor in a pattern corresponding to the latent image. The photoconductor 102 is further rotated to a transfer point, where the patterned toner is then transferred to the paper 112, often using an electrostatic attraction element 110 such as a corona wire in the form of a corotron or scorotron.

The paper 112, with toner loosely adhered thereto, is fed forward through a fusing station 114 that, generally through a combination of heat and pressure, causes the thermoplastic toner particles to permanently adhere to the paper, thus forming a robust image.

Following transfer of the toner, the photoconductive medium 102 is rotated past a discharge lamp 116 and a cleaner 118, and then repeats the process as it is rotated to the sensitizer or charger 104.

In various printers, light emitting diode (LED), liquid crystal shutter (LCS), vacuum fluorescent, and other types of arrayed light modulator write heads have been used for modulating light onto the photoconductor. Generally through, scanned laser beam exposure or imaging modules have gained favor in the art due to an appropriate balance of cost, speed, performance, and durability. An electrophotographic printer that uses a scanned laser beam to provide light modulation onto the surface of the photoconductive medium may be conveniently referred to as a laser beam printer or LBP.

Figure 2 illustrates the general construction of an LBP exposure unit 106 made according to the prior art with a rotating polygon beam scanner. A laser diode 202 having a wavelength matched to the sensitivity of the photoconductor (often infrared in the case or an organic photoconductor) is modulated with an image Signal. Beam-forming optics 204 produce a laser beam having a desired shape and trajectory. The laser beam is reflected off a rotating polygon mirror 206 and is scanned across the photoconductor 102 through optical elements 208. It may be noted that the design or the exposure module 106 is such that the reflective facets 210a, 210b, etc. of the rotating polygon 206 are placed forward of the center of rotation such that the arriving beam sweeps over each mirror surface as it is deflected across its deflection angle, the deflection angle being sufficient to traverse the photoconductor 102.

One difficulty encountered with scanned laser beam exposure modules relates to the technology used to scan the laser beam. Most frequently, rotating polygon mirrors have been used. Rotating polygon mirrors may suffer from relatively large mass, slow ramp-up to speed, large size, noise, bearing reliability issues, relatively high power consumption, and other shortcomings.

U.S. Patent Application 2003/072066 A1 discloses an optical scanning device comprising a plurality of scanning optical systems including a plurality of respective deflecting units each performing an optical scanning by oscillation, wherein the deflecting units have substantially equal scanning frequencies. The scanning device has a scan plate, two torsion arms defining an axis of rotation of the scan plate and two opposed mounting stmctures.

U.S. Patent No. 6,360,035 discloses a MEMS-based optical microswitch for use with a laser beam comprising a support body and first and second output fibers carried by the body.

U.S. Patent Application 2003/0053156 A1 discloses an optical scanning device comprising an optical deflector with a movable mirror and torsion bars supporting the mirror and formed integrally with the mirror.

U.S. Patent No. 6,672,732 discloses a micromechanical oscillating device comprising a vibrating structure which is connected to a supporting body via a spring structure. The spring structure comprises a torsion-spring element, which defines a torsion axis and permits a torsional vibration about the torsion axis, and a converter structure, which partially converts forces acting perpendicularly to the torsion axis into forces acting in a parallel manner to the torsion axis.

### SUMMARY OF THE INVENTION

The invention is defined by the independent claims. The dependent claims concern optional features of some embodiments of the invention.

### OVERVIEW

Various aspects according to the disclosure relate to microelectromechanical system (MEMS) scanners and the use of a MEMS laser beam scanner in an electrophotographic printer exposure unit. Such an approach can result in reduced mass and size, faster start-up, reduced noise, higher reliability, and other advantages, compared to rotating polygon exposure units.

According to several aspects of the invention, a MEMS laser beam scanner may be formed with various physical and operational attributes; including mirror size, scan angle, scan frequency, and mirror flatness; to be especially well-adapted to an electrophotographic printer exposure unit. A MEMS mirror with extended length transverse the scanning axis can be substituted for a rotating polygon without substantial modifications to the exposure module optical design.

Other aspects will become apparent to the reader through reference to the appended brief description of the drawings, detailed description, claims, and figures.

### BRIEF DESCRIPTION OF THE DRAWINGS

Figure 1 is a diagram illustrating the principal components of a typical electrophotographic printer.
Figure 2 is a diagrammatic view of a LBP exposure unit with a rotating polygon scanner made according to the prior art.
Figure 3 is a view of a MEMS scanner made according to an embodiment of the present invention.
Figure 4 is a graph illustrating the dynamic response of the MEMS scanner of Figure 3.
Figure 5 is a view of a number of MEMS devices of Figure 3 showing how they can be arrayed on a silicon wafer during manufacture.
Figure 6 is a view of a mounting clamp for mounting the MEMS scanner of Figure 3.
Figure 7 is a detailed view of a piezo-electric stack used to form the actuator of Figure 6.
Figure 8 is a front perspective view of a MEMS scanner package for use in a LBP.
Figure 9 includes two additional perspective views of the MEMS scanner package of Figure 8.

### DETAILED DESCRIPTION

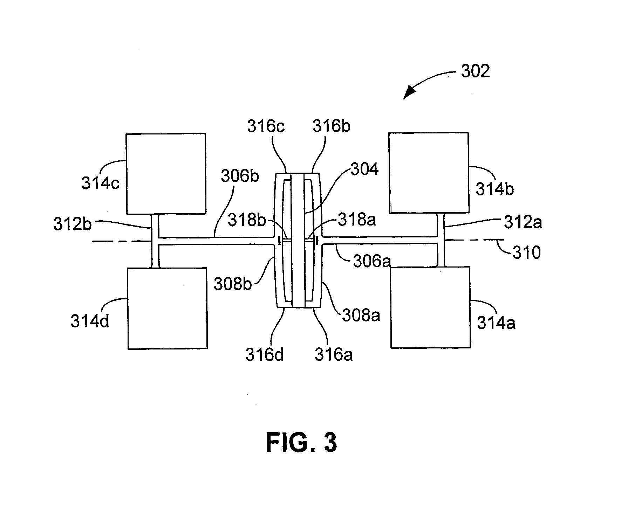

Figure 3 illustrates a MEMS scanner 302 that may be used in a LBP. The exemplary embodiment shown herein relates to a 40 page per minute (ppm), 1200 dot per inch (dpi) LBP. MEMS scanner 302 is photolithographically formed from single-crystal silicon using bulk micromachining as is known to the art. A scan plate 304 having a mirror surface is coupled to a pair of torsion arms 306a, 306b through respective suspension beams 308a, 308b. Torsion arms 306a, 306b define a rotational axis 310 about which scan plate 304 and suspension beams 308a, 308b rotate. Suspension beams 308a and 308b help to keep the mirror surface relatively flat, typically within lambda/4, by spreading the torque loads induced by the torsion arms 306a, 306b across the surface of the scan plate 304.

Suspension beams 308 are coupled to scan plate 304 by respective outer (lateral) connectors 316a, 316b, 316c, 316d and respective axial connectors 318a, 318b. Taken together, suspension elements 308a, 316a, 316b, and 318a form a first suspension coupling between first torsion arm 306a and scan plate 304. Similarly suspension elements 308b, 316c, 316d, and 318b form a second suspension coupling between second torsion arm 306b and scan plate 304.

A mirror surface can be formed on the surface of scan plate 304 using metal, stacked dielectric, or other technologies known to the art. Aluminum can be used to form a mirror having greater than about 85% reflectivity at red and infrared wavelengths (having a local minimum at about 825 nanometers wavelength). Gold or silver can be used to form a mirror having greater than about 90% to 95% reflectivity at red and infrared wavelengths. Stacked (such as quarter-wave) dielectric reflectors can achieve very high reflectivity across a wide range of wavelengths.

Torsion arms 306a, 306b terminate at respective "T-bars" 312a and 312b. T-bars 312a and 312b, in turn connect to respective mounting pads 314a, 314b and 314c, 314d as illustrated. Taken together, T-bar 312a and mounting pads 314a, 314b constitute a first mounting structure for coupling torsion arm 306a to a support structure (not shown). Similarly, T-bar 312b and mounting pads 314c, 314d form a second mounting structure for coupling torsion arm 306b to a support structure (not shown). In alternative embodiments, mounting structures can take other forms, including for example a pair of rectangular mounting pads, each joined directly to a respective torsion arm, or other forms. Alternatively, a frame-type mounting structure may be formed peripheral to the scan plate 304 and torsion arms 306a, 306b. The exemplary embodiment of Figure 3 may have certain advantages such as, for example, packing more devices per wafer, having reduced dynamic stress, allowing individual mounting pads to be coupled to actuators, and allowing the mounting pads 314 to "float" relative to one another, thereby reducing residual stresses in the MEMS scanner.

When mounting pads 314a, 314b, 314c, and 314d are mounted to a housing, periodic application of power to an actuator (not shown) will cause mirror 304 to periodically rotate back and forth about the axis of rotation 310 defined by torsion arms 306a, 306b.

Scan plate 304 is formed to be approximately 8 millimeters long (in the direction perpendicular to the axis of rotation 310) and 750 micrometers wide (in the direction parallel to the axis of rotation 310). Thus, for the exemplary embodiment, the scan plate (and mirror formed thereon) has a lateral dimension about 10.67 times its longitudinal dimension.

When driven with an appropriate signal, (such as a 5 kilohertz (KHz) sine wave varying between about 0 (zero) and 25-30 volts for a four actuator design) the mirror responds with a ± 20° mechanical scan angle at a frequency of 5 KHz.

As illustrated, MEMS scanner 302 includes two torsion arms 306a, 306b, each 8.76 millimeters long (including fillets), terminated on their proximal ends by a 400 micrometer by 200 micrometer elliptical fillet at respective suspensions (in particular at suspension beams 308a, 308b), and terminated on their distal ends at respective T-bars 312a, 312b, again with a 400 micrometer by 200 micrometer elliptical fillet. The torsion arms 306a, 306b are 384 micrometers wide. As with the rest of MEMS scanner 302, the torsion arms are etched to a full wafer thickness of 700 micrometers using DRIE processing. For a given scan plate mass and mass distribution, the width, depth, and length of the torsion arms and T-bars may be adjusted to produce alternative resonant scan frequencies and angles.

The suspension beams 308a, 308b are 396 micrometers wide, are slightly bent to make a slightly obtuse angle with respective torsion arms 306a, 306b of 91.6 degrees, and extend laterally to an extent equal to the lateral extent of the 8 millimeter lateral dimension scan plate 304. Respective suspension center connectors 318a, 318b extend from the centerlines of suspension beams 308a, 308b to the centerline of the scan plate 304, a distance of 500 micrometers (including fillets). The center connectors 318a, 318b are each 164 micrometers wide and include 100 micrometers radius fillets at both ends. Four suspension outer connectors 316a, 316b, 316c, and 316d extend from the ends of suspension beams 308a, 308b to the scan plate 304, one on each end of each suspension beam as indicated. The outer connectors 316a, 316b, 316c, 316d are each 250 micrometers wide (laterally) by 400 micrometers long (longitudinally) and do not have fillets. The respective suspensions thus each include a suspension beam 308, a center suspension connector 318, and two outer suspension connectors 316; and connect the torsion arms 306a, 306b to the scan plate 304 in a manner that reduces stress concentrations, spreads the torque load, and reduces dynamic deformation of the scan plate during operation. Alternative suspension configurations are possible and could be implemented by one skilled in the art.

The T-bars 312a, 312b are each 1.8 millimeters long (total lateral dimension inclusive of fillets) by 400 micrometers wide (longitudinal dimension) and extend symmetrically from and perpendicular to the axis formed by torsion arms 306a, 306b. The outer ends of T-bars 312a, 312b connect to four respective mounting pads 314a, 314b, 314c, 314d with 200 micrometer radius fillets as shown. The mounting pads are each 5 millimeters square. The geometry of the T-bars and mounting pads may be adjusted to suit application requirements.

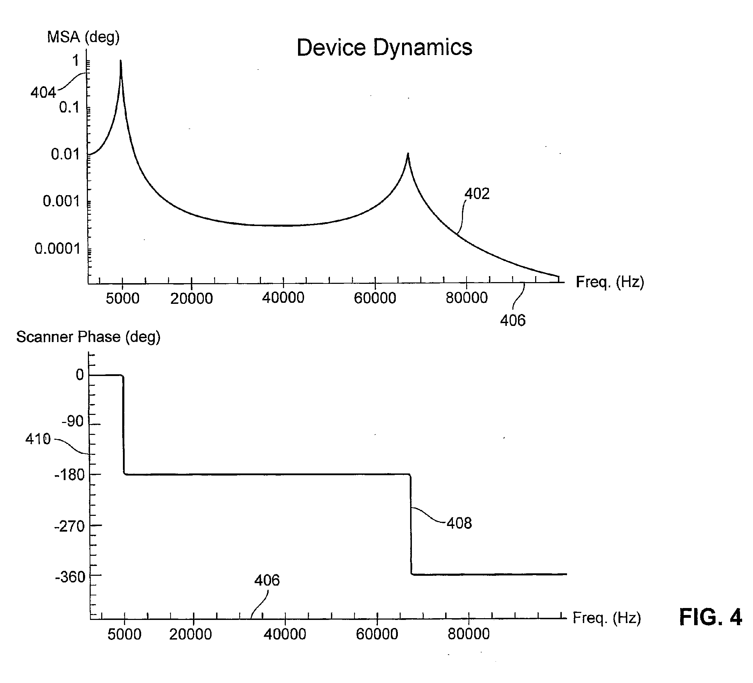

Figure 4 shows graphs illustrating the dynamic response of the MEMS scanner of Figure 3 when a periodic drive signal is applied. Curve 402 indicates an amplitude response 404 as a function of periodic drive frequency 406. Curve 408 illustrates scanner vs. drive phase 410 plotted against the same periodic drive frequency axis 406. From inspection of curve 402, one can see a peak in response at about 5 KHz corresponding to the resonance frequency of the MEMS scanner in the rotation mode. While the size of the peak is plotted on a relative basis, it is, for the exemplary embodiment, sufficiently high to produce a resonance response of ±20° mechanical scan angle at acceptable drive power. For a four-actuator embodiment, a drive waveform approximating a 5 KHz sine wave with amplitude of 0 (zero) to 25-30 volts results in ±20° mechanical scan angle.

The secondary peak at between 65 and 70 KHz corresponds to the resonant behavior of the piezo-electric stack actuators.

Curve 408 illustrates how the phase relationship of the drive signal to the MEMS scanner response inverts at the resonance points. Below 5 KHz, the phase relationship (drive to response) is 0°. Above 5 KHz but below the secondary peak, the phase relationship is -180°. At the primary resonant peak, the phase relationship inverts and passes through -90° (response lagging drive) as indicated. Above the secondary peak, the response of the system drops and the phase response again inverts, passing from -180° below the peak, through -270°(+90°) at the secondary resonance peak, to -360° (0°) at frequencies above the secondary resonance peak. To maximize efficiency, it has been found to be advantageous to operate the MEMS scanner at or very near the primary resonance peak.

For operation at 5 KHz, the resonance frequency of the MEMS scanner is trimmed to be a few hertz above 5 KHz, typically in the range of 5.001 to 5.005 KHz. Such trimming may be accomplished using methods described in U.S. Patent Number 6,245,590. It has been found to be advantageous to factory trim resonant frequency using a method of adding weight, in the form of epoxy applied to the scan plate.

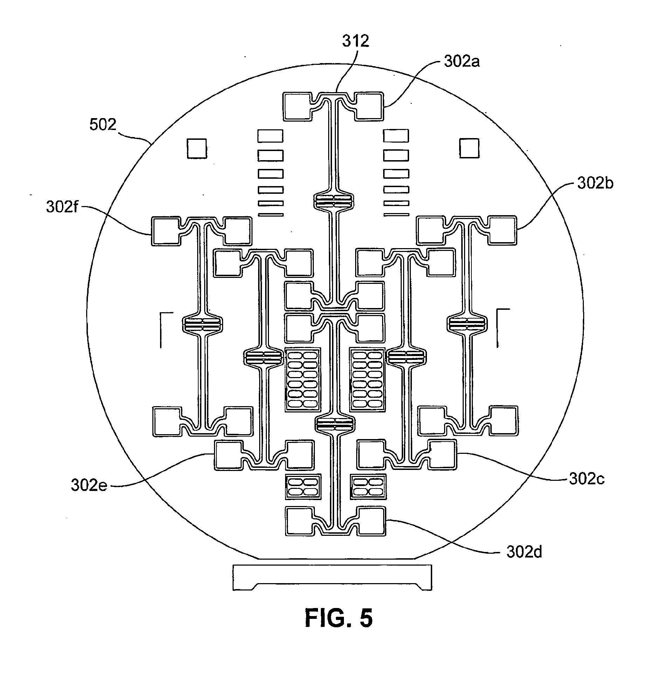

Figure 5 illustrates a prototypical layout of MEMS scanners 302a, 302b, 302c, 302d, 302e, and 302f on a 100 millimeter silicon wafer 502. As may be seen, the MEMS scanners are densely packed with interdigitated mounting pads and mirrors. This is done to maximize yield per wafer. Larger wafers would be similarly densely packed with devices. Rather than dicing the devices apart using a dicing saw, a photolithographic step such as deep reactive ion etch (DRIE) is used to almost completely release the scanners from the wafer. Very fine silicon "bridges" may be seen connecting the scanners to the wafer at intervals. To release the scanners, these bridges are simply broken and the scanners popped out.

Figure 5 further illustrates an alternate T-bar 312 design wherein the ends of the "T" are offset toward the scan plate. This can result in shorter part length or better interdigitation of neighboring parts on the wafer, and may be useful for minimizing scanner size, maximizing yield from the wafer, etc.

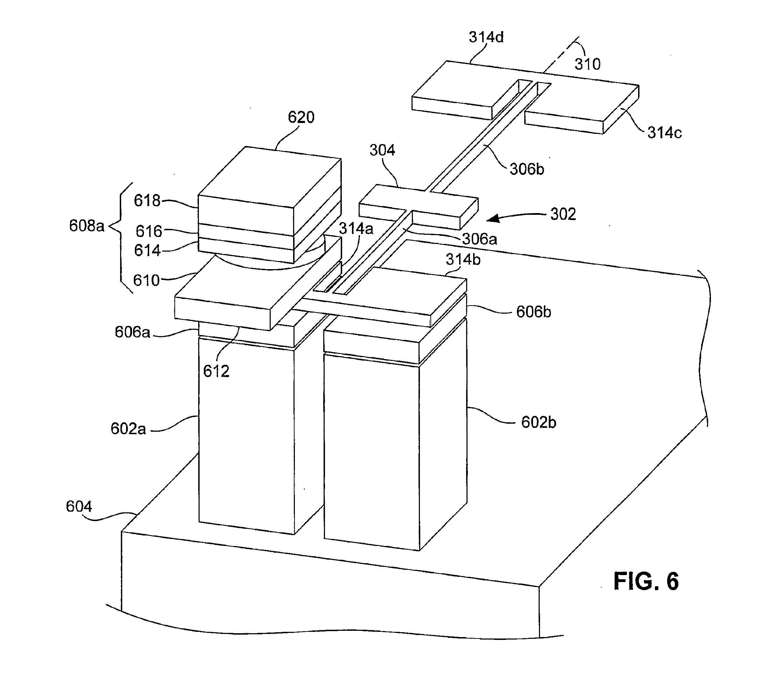

Figure 6 illustrates a clamp and actuator arrangement for the MEMS scanner. A pair of commercially-available piezo-electric stacks 602a and 602b, set upon a common mounting base 604, support respective mounting pads 314a, 314b of MEMS scanner 302 through respective first insulators 606a, 606b. From their respective positions, the piezo-electric stacks 602a, 602b may be alternately electrically compressed and expanded to produce a periodic rotation of the mounting pads 314a, 314b about the axis of rotation 310 defined by torsion arms 306a, 306b. Similarly, common mode activation of the piezo-electric stacks 602a, 602b may be used to rotate the MEMS scanner 302 about a transverse axis substantially parallel to the long axis of the mirror 304.

To maintain contact between the MEMS scanner 302 and the piezo-electric actuator stacks 602a, 602b, respective clamps or pressure assemblies 608a and 608b (608b not shown) press the mounting pads 314a, 314b down against the actuator stacks. Clamp 608b is omitted from Figure 6 for clarity. As shown, clamps 608 include (starting from the bottom of the assembly and contacting the mounting pad 314) a first pressure plate 610, an optional series disk spring 612, a second pressure plate 614, a second insulator 616, and a third pressure plate 618. In one embodiment, an edge of first pressure plate 601 is extended out from the pressure assembly as shown. As will be explained below, this provides a bonding position for a heater wire or lead. Series disk spring 612 is of a commercially available type such as SPRINGMASTERS #D63203 and is selected to have relatively low stiffness but high (>>5 KHz) intrinsic resonant frequency. A series of two springs, a different number of springs, or no springs at all may be used, depending upon application requirements. First and second pressure plates 610 and 614 provide robust surfaces for series disk spring 612 to press against. Second insulator 616 provides for electrical insulation of the MEMS scanner 302. First and second insulators 606, 616 are formed from a material with appropriate density, electrical insulating ability, and compressive strength such as PYREX glass. First and second pressure plates 610, 614 are formed from materials that are suitably electrically conductive and have appropriate physical properties including compressive strength, toughness, and density, such as steel. Third pressure plate 618 provides a mounting surface for second insulator 616 and connects the assembly to a housing (not shown). Third pressure plate 618, preferably formed from steel, includes a bore 620 for receiving a mounting and adjustment screw (not shown). As may be appreciated by those skilled in the art, alternative or modified clamps may be used.

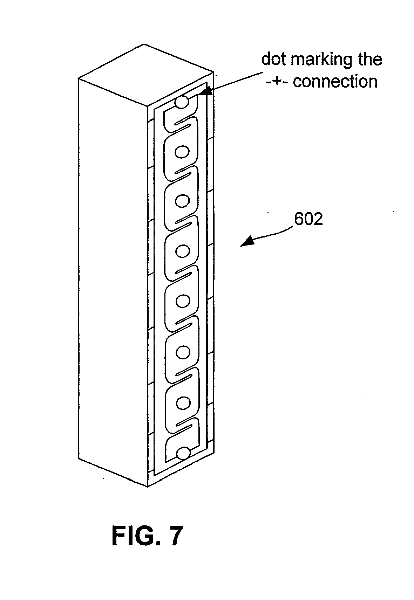

Figure 7 is a view of a piezo stack actuator 602. Such actuators are available from several sources including http://www.physikinstrumente.de model PICMA 885.10.

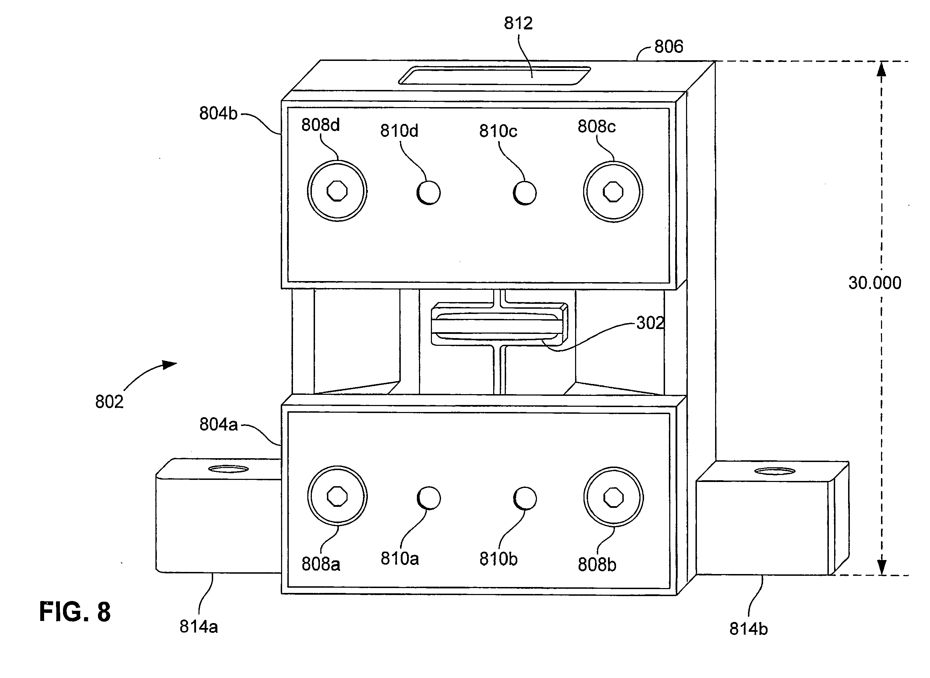

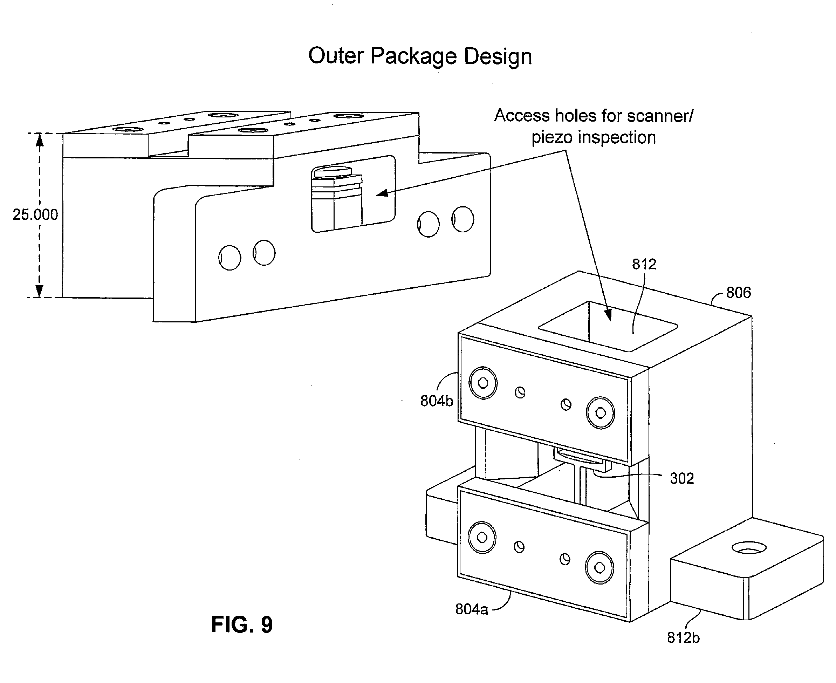

Figures 8 and 9 are views of a MEMS scanner housing 802 for use in a LBP. Two front plates 804a, 804b are fastened to a rear housing 806 with mounting screws 808a, 808b, 808c, 808d. MEMS scanner 302 is held in a cavity therein that allows for an appropriate amount of rotation. Threaded adjustment screw holes 810a, 810b, 810c, and 810d receive adjustment screws (not shown) that protrude into corresponding adjustment screw receiving bores 620 formed in third pressure plates 618 (shown in Figure 6). During assembly, adjustment screws are turned to provide an appropriate amount of preload on series disk spring 612 (not shown). Behavior of the MEMS scanner under actuation can be observed through MEMS observation port 812, formed in the top of rear housing 806. The MEMS scanner assembly 802 is secured to the exposure unit of a LBP via mounting tabs 814a, 814b formed in housing 806.

The use of clamps 608 to secure the MEMS scanner 302 in housing 802 results in a mount that "floats", allowing the mounting pads 314 to move a bit with respect to one another. In some embodiments, slight twisting of the clamps 608 during assembly can result in slight in-plane twisting of the mounting pads 314. This can result in undesirable residual stress in the T-bars and/or torsion bars of the MEMS scanner. Such twisting may be reduced or eliminated by running or "burning-in" the mounted scanner for a few hours at reduced scan angle. In an exemplary embodiment, the scanner is run at half amplitude for approximately four hours. The burn-in process can reduce the occurrence of "infant" failures associated with mechanical failure of the T-bars and/or torsion arms. Alternative, reduced twist clamp assembly designs may be substituted to reduce or eliminate the need for scanner assembly bum-in.

The MEMS scanner 302 may be driven by four piezo-electric stacks 602, one juxtaposed against each mounting pad 314a, 314b, 314c, and 314d. Alternatively, one end of the MEMS scanner may be held in a fixed position, i.e. mounting pads 314c and 314d may be clamped against a solid mounting point, and the other end of the MEMS scanner may be driven by piezo-electric actuators, i.e. mounting pads 314a and 314b may each be clamped against piezo-electric stacks as shown in Figure 6. In a third alternative, three of the mounting pads are each clamped to a fixed, solid mounting point and one piezo-electric stack actuator is used. Typically, the choice hinges on cost vs. actuator power requirements.

As indicated above, the MEMS scanner is trimmed to have a resonant frequency within a few hertz of the desired operational frequency. As may be appreciated from curve 402 of Figure 4, small changes in resonant frequency can result in relatively substantial changes in rotation amplitude (for a given periodic actuation voltage). The inventors have discovered that controlled heating of the MEMS device further trims the resonance frequency, and hence the actuation amplitude, even though in the exemplary embodiment the MEMS scanner has no outer frame. Referring back to Figure 6, the extended tab on the first pressure plate 610 of clamp 608a receives a heater wire as does the corresponding pressure plate of clamp 608b (not shown). Similarly, corresponding pressure plates adjacent mounting pads 314c and 314d (also not shown) also receive heater wires. The heater wires may be attached by soldering to the gold plated extended tab of first pressure plates 610, by soldering to metallized bond pad formed, for example on the mounting pads 314, or by other method as will be apparent to those skilled in the art. In use, the scan amplitude is monitored by sensors and the electric potential between the two ends of scanner 302 (mounting pads 606a and 606b forming one such end and mounting pads 606c and 606d forming the other end) is adjusted. Resistance of the silicon material to current flow, and particularly the torsion arms 306a, 306b, causes joule heating. Higher temperatures cause a "softening" of the torsion arms and a corresponding reduction in resonant frequency. Thus, when the device is operated just below its nominal resonant frequency, heating may be increased to reduce the scan amplitude or heating may be reduced to increase the scan amplitude. It has been experimentally determined that 0 to 1.5 W of tuning power can provide a resonant frequency tuning range of about 8 Hz. This range may be somewhat lower at higher scanning frequencies and somewhat higher at lower scanning frequencies, presumably as a result of airflow over the scanner providing cooling during operation.

The preceding overview of exemplary embodiments of the invention, brief description of the drawings, and detailed description describe exemplary embodiments of the present invention in a manner intended to foster ease of understanding by the reader. Other structures, methods, and equivalents may be within the scope of the invention. As such, the scope of the invention described herein shall be limited only by the claims.

## Claims

1. A MEMS scanner (302) for a laser printer; comprising:
a silicon scan plate (304) having an axis of rotation (310), a first dimension parallel to the axis of rotation, a second dimension perpendicular to the axis of rotation;
first and second opposed torsion arms (306a, 306b), each torsion arm coupled to the scan plate (304) and extending longitudinally from a proximal to a distal point, the first and second torsion arms (306a, 306b) defining the axis of rotation of the scan plate (304); and
first (312a, 314a, 314b) and second (312b, 314c, 314d) opposed mounting structures, each mounting structure coupled to a distal point of a respective torsion arm (306a, 306b);
**characterized in that** said second dimension is greater than 4 times the first dimension; and
further **characterized by**:
first (308a, 316a, 316b, 318a) and second suspensions (308b, 316c, 316d, 318b) interposed between the scan plate (304) and respective first and second torsion arms (306a, 306b), the first (308a, 316a, 316b, 318a) and second (308b, 316c, 316d, 318b) suspensions forming a torque spreading apparatus operative to maintain dynamic flatness of the mirror (304) during operation of the MEMS scanner (302); and
the first (308a, 316a, 316b, 318a) and second (308b, 316c, 316d, 318b) suspensions include respective first and second suspension beams (308a, 308b) and the first and second suspension beams (308a, 308b) are coupled to the silicon scan plate (304) by respective center connectors (318a, 318b) and first and second lateral connectors (316a, 316b, 316c, 316d) displaced along the second dimension from the axial point.

2. The MEMS scanner (302) for a laser printer of claim 1, wherein the silicon scan plate (304) has a second dimension greater than 8 times its first dimension.

3. The MEMS scanner (302) for a laser printer of claim 2, wherein the silicon scan plate (304) has a second dimension of 8 millimeters and a first dimension of 750 micrometers.

4. The MEMS scanner (302) for a laser printer of claim 1, wherein the silicon scan plate (304) and first and second opposed torsion arms (306a, 306b) are 700 micrometers thick.

5. The MEMS scanner (302) for a laser printer of claim 1, wherein the first and second opposed torsion arms (306a, 306b) each has a length greater than 8 millimeters.

6. The MEMS scanner (302) for a laser printer of claim 5, wherein the first and second opposed torsion arms (306a, 306b) each has a length of 8.76 millimeters.

7. The MEMS scanner (302) for a laser printer of claim 1, wherein the first and second opposed torsion arms (306a, 306b) each has a width of 384 micrometers.

8. The MEMS scanner (302) for a laser printer of claim 1, wherein the first and second opposed torsion arms (306a, 306b) each has a thickness greater its width.

9. The MEMS scanner (302) for a laser printer of claim 1, wherein the first dimension of the scan plate (304) is greater than half its thickness and smaller than twice its thickness.

10. The MEMS scanner (302) for a laser printer of claim 1, wherein the first (312a, 314a, 314b) and second (312b, 314c, 314d) opposed mounting structures further include:
first and second opposed T-bars (312a, 312b), each T-bar coupled to a distal point of a respective torsion arm (306a, 306b) and extending along the second dimension in opposing directions from an axial to two equidistant lateral points therefrom; and
first, second, third, and fourth mounting pads (314a, 314b, 314c, 314d), each mounting pad coupled to a respective equidistant point of a T-bar displaced along the second dimension from the axial point.

11. The MEMS scanner (302) for a laser printer of claim 10; wherein the first torsion arm (306a) is coupled to the first T-bar (312a) with first and second elliptical fillets at the point of coupling.

12. The MEMS scanner (302) for a laser printer of claim 11, wherein the first and second elliptical fillets have a dimension of 400 micrometers along the torsion arm (306a) and 200 micrometers along the T-bar (312a).

13. The MEMS scanner (302) for a laser printer of claim 10, wherein the equidistant lateral points of the T-bars (312a, 312b) are offset toward the silicon scan plate (304) in the first direction compared to the distal point of the torsion arms (306a, 306b).

14. The MEMS scanner (302) for a laser printer of claim 10, further comprising at least one stacked piezo-electric actuator (602a) supporting at least one mounting pad (314a).

15. The MEMS scanner (302) for a laser printer of claim 14, wherein the at least one stacked piezo-electric actuator (602a) includes two stacked piezo-electric actuators (602a, 602b), each supporting a respective mounting pad (314a, 314b).

16. The MEMS scanner (302) for a laser printer of claim 14, wherein the at least one stacked piezo-electric actuator (602a) includes four stacked piezo-electric actuators (602a, 602b, 602c, 602c), each supporting a respective mounting pad (314a, 314b, 314c, 314d).

17. The MEMS scanner (302) for a laser printer of claim 10, further comprising:
a housing (802) to which the first, second, third, and fourth mounting pads (314a, 314b, 314c, 314d) are clamped.

18. The MEMS scanner (302) of claim 17, wherein:
the third and fourth mounting pads (314c, 314d) are clamped directly to the housing (802);
the first and second mounting pads (314a, 314b) are clamped to respective first and second stacked piezo-electric actuators (602a, 602a); and
the first and second stacked piezo-electric actuators (602a, 602b) are held in contact with the housing (802).

19. The MEMS scanner (302) of claim 17, wherein the first, second, third, and fourth mounting pads (314a, 314b, 314c, 314d) are clamped to respective first, second, third, and fourth stacked piezo-electric actuators (602a, 602b); and
the first, second, third, and fourth piezo-electric actuators (602a, 602b) are held in contact with the housing (802).

20. The MEMS scanner (302) of claim 19, wherein the first, second, third and fourth mounting pads (314a, 314b, 314c, 314d) are clamped to the respective first, second, third, and fourth stacked piezo-electric actuators (602a, 602b) so as to provide a pre-loaded compressive force on the respective stacked piezo-electric actuators (602a, 602b).

21. The MEMS scanner (302) for a laser printer of claim 17, further comprising a laser printer exposure unit (106) to which the housing is mounted.

22. The MEMS scanner (302) for a laser printer of claim 1, wherein the scan plate (304) is operable to periodically rotate back-and-forth around the axis of rotation (310) defined by the first and second torsion arms (306a, 306b) at a frequency greater than 1 kHz.

23. The MEMS scanner (302) for a laser printer of claim 22, wherein the scan plate (304) is operable to periodically rotate back-and-forth around the axis of rotation (310) defined by the first and second torsion arms (306a, 306b) at a frequency of 5 kHz.

24. The MEMS scanner (302) for a laser printer of claim 1, wherein the scan plate (304) is operable to periodically rotate back-and-forth around the axis of rotation (310) defined by the first and second torsion arms (306a, 306b) to a rotational displacement greater than 10 degrees mechanical zero-to-peak scan angle.

25. The MEMS scanner (302) for a laser printer of claim 24, wherein the scan plate (304) is operable to periodically rotate back-and-forth around the axis of rotation (310) defined by the first and second torsion arms (306a, 306b) to a rotational displacement of 20 degrees mechanical zero-to-peak scan angle.

26. The MEMS scanner (302) for a laser printer of claim 1, wherein the first and second suspension beams (308a, 308b) each have a first dimension smaller than the first dimension of the silicon scan plate (304).

27. The MEMS scanner (302) for a laser printer of claim 1, wherein the MEMS scanner (302) is photolithographically formed from a silicon wafer (502).

28. The MEMS scanner (302) for a laser printer of claim 1, wherein the silicon scan plate (304), the first and second opposed torsion arms (306a, 306b), and the first (312a, 314a, 314b) and second (312b, 314c, 314d) opposed mounting structures are formed having a constant thickness corresponding to the thickness of a silicon wafer (502).

29. The MEMS scanner (302) for a laser printer of claim 1, further comprising:
a mirror formed on a surface of the silicon scan plate (304).

30. The MEMS scanner (302) for a laser printer of claim 29, wherein the mirror has a reflectivity greater than 90% at a wavelength of 650 nanometers.

31. The MEMS scanner (302) for a laser printer of claim 30, wherein the mirror has a reflectivity greater than 95% at a wavelength of 650 nanometers.

32. The MEMS scanner (302) for a laser printer of claim 1, further comprising first and second heater leads functionally coupled to the respective first (312a, 314a, 314b) and second (312b, 314c, 314d) opposed mounting structures.

33. The MEMS scanner (302) for a laser printer of claim 32, wherein the first and second heater leads are operable to create an electric potential across the first and second torsion arms (306a, 306b).

34. The MEMS scanner (302) for a laser printer of claim 33, wherein the first and second heater leads are operable to induce joule heating within the first and second torsion arms (306a, 306b).

35. A method for operating a laser printer, comprising:
modulating a laser (202) with image data to produce a modulated laser beam;
shaping the modulated laser beam to produce a shaped modulated laser beam;
periodically deflecting the shaped modulated laser beam to produce a scanned shaped modulated laser beam; and
aligning the scanned shaped modulated laser beam to impinge upon a rotating photoconductor (102) to produce a latent electrostatic image corresponding to the video data on the photoconductor;
wherein the periodic deflection of the shaped modulated laser beam is performed by the MEMS scanner (302) of any of claims 1-34.

36. An electrophotographic printer, comprising:
a photoconductor (102) operable to, in succession, receive a static charge, receive modulated light to form a latent electrostatic image, receive toner in a pattern corresponding to the latent electrostatic image, and transfer the toner to a receiving web; and
an exposure unit (106) operable to provide modulated light to the photoconductor (102), the exposure unit comprising:
a light source (202) responsive to a modulated signal;
beam shaping optics (204) aligned to receive light from the light source and produce a shaped beam of light; and
the MEMS scanner (302) of any of claims 1-34.

37. Use of a MEMS scanner (302) according to any one of claims 1-34 in an electrophotographic printer, the electrophotographic printer comprising:
a photoconductor (102) operable to, in succession, receive a static charge, receive modulated light to form a latent electrostatic image, receive toner in a pattern corresponding to the latent electrostatic image, and transfer the toner to a receiving web; and
an exposure unit (106) operable to provide modulated light to the photoconductor (102), the exposure unit comprising:
a light source (202) responsive to a modulated signal;
beam shaping optics (204) aligned to receive light from the light source and produce a shaped beam of light; and
the MEMS scanner (302) aligned to receive the shaped beam of light and operable to periodically scan the light across the photoconductor (102).

## Patentansprüche

1. MEMS-Ablenkvorrichtung (302) (MEMS = mikroelektromechanisches System) für einen Laserdrucker; aufweisend:
eine Silizium-Ablenkplatte (304) mit einer Rotationsachse (310), einer ersten Erstreckung parallel zu der Rotationsachse und einer zweiten Erstreckung senkrecht zu der Rotationsachse;
einen ersten und einen zweiten entgegengesetzten Torsionsarm (306a, 306b), wobei jeder Torsionsarm mit der Ablenkplatte (304) gekoppelt ist und sich in Längsrichtung von einem proximalen Punkt zu einem distalen Punkt erstreckt, wobei der erste und der zweite Torsionsarm (306a, 306b) die Rotationsachse der Ablenkplatte (304) definieren; und
eine erste (312a, 314a, 314b) und eine zweite (312b, 314c, 314d) entgegengesetzte Haltestruktur, wobei jede Haltestruktur mit einem distalen Punkt eines jeweiligen Torsionsarms (306a, 306b) gekoppelt ist;
**dadurch gekennzeichnet, dass** die zweite Erstreckung größer als viermal die erste Erstreckung ist; und
ferner **gekennzeichnet durch**:
eine erste (308a, 316a, 316b, 318a) und eine zweite (308b, 316c, 316d, 318b) Aufhängung, die zwischen der Ablenkplatte (304) und dem ersten bzw. dem zweiten Torsionsarm (306a, 306b) angeordnet sind, wobei die erste (308a, 316a, 316b, 318a) und die zweite (308b, 316c, 316d, 318b) Aufhängung eine Drehkraftaufteilungseinrichtung bilden, die dazu wirksam ist, eine dynamische Flachheit des Spiegels (304) während des Betriebs der MEMS-Ablenkvorrichtung (302) aufrecht zu erhalten; und
die erste (308a, 316a, 316b, 318a) und die zweite (308b, 316c, 316d, 318b) Aufhängung weisen einen ersten bzw. einen zweiten Aufhängungsträger (308a, 308b) auf, und der erste und der zweite Aufhängungsträger (308a, 308b) sind mit der Silizium-Ablenkplatte (304) **durch** jeweilige Mittelverbindungsstücke (318a, 318b) und erste und zweite seitliche Verbindungsstücke (316a, 316b, 316c, 316d), die entlang der zweiten Erstreckung von dem axialen Punkt versetzt sind, gekoppelt.

2. MEMS-Ablenkvorrichtung (302) für einen Laserdrucker nach Anspruch 1, bei der die Silizium-Ablenkplatte (304) eine zweite Erstreckung aufweist, die größer als achtmal ihre erste Erstreckung ist.

3. MEMS-Ablenkvorrichtung (302) für einen Laserdrucker nach Anspruch 2, bei der die Silizium-Ablenkplatte (304) eine zweite Erstreckung von 8 Millimetern und eine erste Erstreckung von 750 Mikrometern aufweist.

4. MEMS-Ablenkvorrichtung (302) für einen Laserdrucker nach Anspruch 1, bei der die Silizium-Ablenkplatte (304) und der erste und der zweite entgegengesetzte Torsionsarm (306a, 306b) 700 Mikrometer dick sind.

5. MEMS-Ablenkvorrichtung (302) für einen Laserdrucker nach Anspruch 1, bei der der erste und der zweite entgegengesetzte Torsionsarm (306a, 306b) jeweils eine Länge von mehr als 8 Millimetern aufweisen.

6. MEMS-Ablenkvorrichtung (302) für einen Laserdrucker nach Anspruch 5, bei der der erste und der zweite entgegengesetzte Torsionsarm (306a, 306b) jeweils eine Länge von 8,76 Millimetern aufweisen.

7. MEMS-Ablenkvorrichtung (302) für einen Laserdrucker nach Anspruch 1, bei der der erste und der zweite entgegengesetzte Torsionsarm (306a, 306b) jeweils eine Breite von 384 Mikrometern aufweisen.

8. MEMS-Ablenkvorrichtung (302) für einen Laserdrucker nach Anspruch 1, bei der der erste und der zweite entgegengesetzte Torsionsarm (306a, 306b) jeweils eine Dicke aufweisen, die größer als dessen Breite ist.

9. MEMS-Ablenkvorrichtung (302) für einen Laserdrucker nach Anspruch 1, bei der die erste Erstreckung der Ablenkplatte (304) größer als deren halbe Dicke und kleiner als deren doppelte Dicke ist.

10. MEMS-Ablenkvorrichtung (302) für einen Laserdrucker nach Anspruch 1, bei der die erste (312a, 314a, 314b) und die zweite (312b, 314c, 314d) entgegengesetzte Haltestruktur ferner aufweisen:
einen ersten und einen zweiten entgegengesetzten T-Träger (312a, 312b), wobei jeder T-Träger mit einem distalen Punkt eines jeweiligen Torsionsarms (306a, 306b) gekoppelt ist und sich entlang der zweiten Erstreckung in einander entgegengesetzte Richtungen von einem axialen Punkt zu zwei dazu äquidistanten seitlichen Punkten erstreckt; und
einen ersten, einen zweiten, einen dritten und einen vierten Haltebereich (314a, 314b, 314c, 314d), wobei jeder Haltebereich mit einem jeweiligen äquidistanten Punkt eines T-Trägers gekoppelt ist, der in der zweiten Erstreckung von dem axialen Punkt versetzt ist.

11. MEMS-Ablenkvorrichtung (302) für einen Laserdrucker nach Anspruch 10, bei der der erste Torsionsarm (306a) mit dem ersten T-Träger (312a) gekoppelt ist, und zwar mit einer ersten und einer zweiten elliptischen Hohlkehle am Kopplungspunkt.

12. MEMS-Ablenkvorrichtung (302) für einen Laserdrucker nach Anspruch 11, bei der die erste und die zweite elliptische Hohlkehle eine Erstreckung von 400 Mikrometern entlang des Torsionsarms (306a) und 200 Mikrometern entlang des T-Trägers (312a) aufweisen.

13. MEMS-Ablenkvorrichtung (302) für einen Laserdrucker nach Anspruch 10, bei der die äquidistanten seitlichen Punkte der T-Träger (312a, 312b) in die erste Richtung hin zur Silizium-Ablenkplatte (304) versetzt sind, und zwar verglichen mit dem distalen Punkt der Torsionsarme (306a, 306b).

14. MEMS-Ablenkvorrichtung (302) für einen Laserdrucker nach Anspruch 10, ferner mit mindestens einem stapelartigen piezoelektrischen Betätigungselement (602a), das mindestens einen Haltebereich (314a) hält.

15. MEMS-Ablenkvorrichtung (302) für einen Laserdrucker nach Anspruch 14, bei der das mindestens eine stapelartige piezoelektrische Betätigungselement (602a) zwei stapelartige piezoelektrische Betätigungselemente (602a, 602b) aufweist, von denen jedes einen jeweiligen Haltebereich (314a, 314b) trägt.

16. MEMS-Ablenkvorrichtung (302) für einen Laserdrucker nach Anspruch 14, bei der das mindestens eine stapelartige piezoelektrische Betätigungselement (602) vier stapelartige piezoelektrische Betätigungselemente (602a, 602b, 602c, 602c) aufweist, von denen jedes einen jeweiligen Haltebereich (314a, 314b, 314c, 314d) trägt.

17. MEMS-Ablenkvorrichtung (302) für einen Laserdrucker nach Anspruch 10, ferner aufweisend:
ein Gehäuse (802), an dem der erste, der zweite, der dritte und der vierte Haltebereich (314a, 314b, 314c, 314d) befestigt sind.

18. MEMS-Ablenkvorrichtung (302) nach Anspruch 17, bei der:
der dritte und der vierte Haltebereich (314c, 314d) direkt an dem Gehäuse (802) befestigt sind;
der erste und der zweite Haltebereich (314a, 314b) an einem ersten bzw. einem zweiten gestapelten piezoelektrischen Betätigungselement (602a, 602b) befestigt sind; und
das erste und das zweite gestapelte piezoelektrische Betätigungselement (602a, 602b) in Kontakt mit dem Gehäuse (802) gehalten sind.

19. MEMS-Ablenkvorrichtung (302) nach Anspruch 17, bei der der erste, der zweite, der dritte und der vierte Haltebereich (314a, 314b, 314c, 314d) an einem ersten, einem zweiten, einem dritten bzw. einem vierten gestapelten piezoelektrischen Betätigungselement (602a, 602b) befestigt sind; und
das erste, das zweite, das dritte und das vierte piezoelektrische Betätigungselement (602a, 602b) in Kontakt mit dem Gehäuse (802) gehalten sind.

20. MEMS-Ablenkvorrichtung (302) nach Anspruch 19, bei der der erste, der zweite, der dritte und der vierte Haltebereich (314a, 314b, 314c, 314d) an dem ersten, dem zweiten, dem dritten bzw. dem vierten gestapelten piezoelektrischen Betätigungselement (602a, 602b) befestigt sind, so dass eine komprimierende Vorspannungskraft auf die jeweiligen gestapelten piezoelektrischen Betätigungselemente (602a, 602b) ausgeübt wird.

21. MEMS-Ablenkvorrichtung (302) für einen Laserdrucker nach Anspruch 17, ferner mit einer Laserdrucker-Belichtungseinheit (106), an die das Gehäuse angebracht ist.

22. MEMS-Ablenkvorrichtung (302) für einen Laserdrucker nach Anspruch 1, bei der die Ablenkplatte (304) dazu wirksam ist, periodisch hin und zurück um die durch den ersten und den zweiten Torsionsarm (306a, 306b) definierte Rotationsachse (310) zu rotieren, und zwar mit einer Frequenz größer als 1 kHz.

23. MEMS-Ablenkvorrichtung (302) für einen Laserdrucker nach Anspruch 22, bei der die Ablenkplatte (304) dazu wirksam ist, periodisch hin und zurück um die durch den ersten und den zweiten Torsionsarm (306a, 306b) definierte Rotationsachse (310) zu rotieren, und zwar mit einer Frequenz größer als 5 kHz.

24. MEMS-Ablenkvorrichtung (302) für einen Laserdrucker nach Anspruch 1, bei der die Ablenkplatte (304) dazu wirksam ist, periodisch hin und zurück um die durch den ersten und den zweiten Torsionsarm (306a, 306b) definierte Rotationsachse (310) zu rotieren, und zwar bis zu einem Drehversatz, der größer als ein mechanischer Ablenkwinkel von einem Nullpunkt zu einer Maximalauslenkung von 10 Grad ist.

25. MEMS-Ablenkvorrichtung (302) für einen Laserdrucker nach Anspruch 24, bei der die Ablenkplatte (304) dazu wirksam ist, periodisch hin und zurück um die durch den ersten und den zweiten Torsionsarm (306a, 306b) definierte Rotationsachse (310) zu rotieren, und zwar bis zu einem Drehversatz, der größer als ein mechanischer Ablenkwinkel von einem Nullpunkt zu einer Maximalauslenkung von 20 Grad ist.

26. MEMS-Ablenkvorrichtung (302) für einen Laserdrucker nach Anspruch 1, bei der der erste und der zweite Aufhängungsträger (308a, 308b) jeweils eine erste Abmessung aufweisen, die kleiner als die erste Abmessung der Silizium-Ablenkplatte (304) ist.

27. MEMS-Ablenkvorrichtung (302) für einen Laserdrucker nach Anspruch 1, bei der die MEMS-Ablenkvorrichtung (302) fotolithografisch aus einem Silizium-Wafer (502) gebildet ist.

28. MEMS-Ablenkvorrichtung (302) für einen Laserdrucker nach Anspruch 1, bei der die Silizium-Ablenkplatte (304), der erste und der zweite entgegengesetzte Torsionsarm (306a, 306b) und die erste (312a, 314a, 314b) und die zweite (312b, 314c, 314d) entgegengesetzte Haltestruktur mit einer konstanten Dicke gebildet sind, die der Dicke eines Silizium-Wafers (502) entspricht.

29. MEMS-Ablenkvorrichtung (302) für einen Laserdrucker nach Anspruch 1, ferner aufweisend:
einen auf einer Oberfläche der Silizium-Ablenkplatte (304) ausgebildeten Spiegel.

30. MEMS-Ablenkvorrichtung (302) für einen Laserdrucker nach Anspruch 29, bei der der Spiegel bei einer Wellenlänge von 650 Nanometer einen Reflexionsgrad größer als 90% aufweist.

31. MEMS-Ablenkvorrichtung (302) für einen Laserdrucker nach Anspruch 30, bei der der Spiegel bei einer Wellenlänge von 650 Nanometer einen Reflexionsgrad größer als 95% aufweist.

32. MEMS-Ablenkvorrichtung (302) für einen Laserdrucker nach Anspruch 1, ferner mit einer ersten und einer zweiten Heizleitung, die in Wirkverbindung mit der ersten (312a, 314a, 314b) bzw. der zweiten (312b, 314c, 314d) entgegengesetzten Haltestruktur stehen.

33. MEMS-Ablenkvorrichtung (302) für einen Laserdrucker nach Anspruch 32, bei der die erste und die zweite Heizleitung dazu wirksam sind, ein elektrisches Potential an dem ersten und dem zweiten Torsionsarm (306a, 306b) zu erzeugen.

34. MEMS-Ablenkvorrichtung (302) für einen Laserdrucker nach Anspruch 33, bei der die erste und die zweite Heizleitung dazu wirksam sind, joulesche Wärme in dem ersten und dem zweiten Torsionsarm (306a, 306b) hervorzurufen.

35. Verfahren zum Betrieb eines Laserdruckers, aufweisend:
Modulieren eines Lasers (202) mit Bilddaten, um einen modulierten Laserstrahl zu erzeugen;
Formen des modulierten Laserstrahls, um einen geformten modulierten Laserstrahl zu erzeugen;
periodisches Ablenken des geformten modulierten Laserstrahls, um einen abgelenkten geformten modulierten Laserstrahl zu erzeugen; und
Ausrichten des abgelenkten geformten modulierten Laserstrahls, so dass dieser auf einen rotierenden Fotoleiter (102) auftrifft, um auf dem Fotoleiter ein latentes elektrostatisches Bild zu erzeugen, das den Videodaten entspricht;
wobei die periodische Ablenkung des geformten modulierten Laserstrahls durch die MEMS-Ablenkvorrichtung (302) nach einem der Ansprüche 1-34 ausgeführt wird.

36. Elektrofotografischer Drucker, aufweisend:
einen Fotoleiter (102), der dazu wirksam ist, nacheinander eine statische Ladung zu erhalten, moduliertes Licht zu erhalten, um ein latentes elektrostatisches Bild zu erzeugen, Toner in einem Muster zu erhalten, das dem latenten elektrostatischen Bild entspricht, und den Toner zu einer empfangenden Bahn zu übertragen; und
eine Belichtungseinheit (106), die dazu wirksam ist, dem Fotoleiter (102) moduliertes Licht zu liefern, wobei die Belichtungseinheit aufweist:
eine Lichtquelle (202), die auf ein moduliertes Signal anspricht;
eine strahlformende Optik (204), die derart ausgerichtet ist, dass sie Licht von der Lichtquelle empfängt und einen geformten Lichtstrahl erzeugt; und
die MEMS-Ablenkvorrichtung (302) nach einem der Ansprüche 1-34.

37. Verwendung einer MEMS-Ablenkvorrichtung (302) nach einem der Ansprüche 1-34 in einem elektrofotografischen Drucker, wobei der elektrofotografische Drucker aufweist:
einen Fotoleiter (102), der dazu wirksam ist, nacheinander eine statische Ladung zu erhalten, moduliertes Licht zu erhalten, um ein latentes elektrostatisches Bild zu bilden, Toner in einem Muster zu erhalten, das dem latenten elektrostatischen Bild entspricht, und den Toner an eine empfangende Bahn zu übertragen; und
eine Belichtungseinheit (106), die dazu wirksam ist, dem Fotoleiter (102) moduliertes Licht zu liefern, wobei die Belichtungseinheit aufweist:
eine Lichtquelle (202), die auf ein moduliertes Signal anspricht;
eine strahlformende Optik (204), die derart ausgerichtet ist, dass sie Licht von der Lichtquelle empfängt und einen geformten Lichtstrahl erzeugt; und
die MEMS-Ablenkvorrichtung (302), die derart ausgerichtet ist, dass sie den geformten Lichtstrahl empfängt, und die wirksam ist, um das Licht periodisch über den Fotoleiter (102) abzulenken.

## Revendications

1. Un scanner MEMS (302) pour une imprimante laser, comprenant :
une plaque de balayage en silicium (304) possédant un axe de rotation (310), une première dimension parallèle à l'axe de rotation, une deuxième dimension perpendiculaire à l'axe de rotation,
un premier et un deuxième bras de torsion opposés (306a, 306b), chaque bras de torsion étant couplé à la plaque de balayage (304) et s'étendant longitudinalement d'un point proximal à un point distal, les premier et deuxième bras de torsion (306a, 306b) définissant l'axe de rotation de la plaque de balayage (304), et
une première (312a, 314a, 314b) et une deuxième (312b, 314c, 314d) structures de montage opposées, chaque structure de montage étant couplée à un point distal d'un bras de torsion respectif (306a, 306b),
**caractérisé en ce que** ladite deuxième dimension est supérieure à 4 fois la première dimension, et
**caractérisé en outre par** :
une première (308a, 316a, 316b, 318a) et une deuxième (308b, 316c, 316d, 318b) suspensions interposées entre la plaque de balayage (304) et des premier et deuxième bras de torsion respectifs (306a, 306b), les première (308a, 316a, 316b, 318a) et deuxième (308b, 316c, 316d, 318b) suspensions formant un appareil d'étalement de couple conçu de façon à maintenir une planéité dynamique du miroir (304) au cours du fonctionnement du scanner MEMS (302), et
les première (308a, 316a, 316b, 318a) et deuxième (308b, 316c, 316d, 318b) suspensions comprennent des première et deuxième tiges de suspension respectives (308a, 308b) et les première et deuxième tiges de suspension (308a, 308b) sont couplées à la plaque de balayage en silicium (304) par des connecteurs centraux respectifs (318a, 318b) et des premier et deuxième connecteurs latéraux (316a, 316b, 316c, 316d) disposés le long de la deuxième dimension à partir du point axial.

2. Le scanner MEMS (302) pour une imprimante laser selon la Revendication 1, où la plaque de balayage en silicium (304) possède une deuxième dimension supérieure à 8 fois sa première dimension.

3. Le scanner MEMS (302) pour une imprimante laser selon la Revendication 2, où la plaque de balayage en silicium (304) possède une deuxième dimension de 8 millimètres et une première dimension de 750 micromètres.

4. Le scanner MEMS (302) pour une imprimante laser selon la Revendication 1, où la plaque de balayage en silicium (304) et les premier et deuxième bras de torsion opposés (306a, 306b) ont une épaisseur de 700 micromètres.

5. Le scanner MEMS (302) pour une imprimante laser selon la Revendication 1, où les premier et deuxième bras de torsion opposés (306a, 306b) possèdent chacun une longueur supérieure à 8 millimètres.

6. Le scanner MEMS (302) pour une imprimante laser selon la Revendication 5, où les premier et deuxième bras de torsion opposés (306a, 306b) possèdent chacun une longueur de 8,76 millimètres.

7. Le scanner MEMS (302) pour une imprimante laser selon la Revendication 1, où les premier et deuxième bras de torsion opposés (306a, 306b) possèdent chacun une largeur de 384 micromètres.

8. Le scanner MEMS (302) pour une imprimante laser selon la Revendication 1, où les premier et deuxième bras de torsion opposés (306a, 306b) possèdent chacun une épaisseur supérieure à leur largeur.

9. Le scanner MEMS (302) pour une imprimante laser selon la Revendication 1, où la première dimension de la plaque de balayage (304) est supérieure à la moitié de son épaisseur et inférieure à deux fois son épaisseur.

10. Le scanner MEMS (302) pour une imprimante laser selon la Revendication 1, où les première (312a, 314a, 314b) et deuxième (312b, 3140, 314d) structures de montage opposées comprennent en outre :
une première et une deuxième barres en T opposées (312a, 312b), chaque barre en T étant couplée à un point distal d'un bras de torsion respectif (306a, 306b) et s'étendant le long de la deuxième dimension dans des directions opposées à partir d'un point axial vers deux points latéraux équidistants de celui-ci, et
des premier, deuxième, troisième et quatrième plots de montage (314a, 314b, 314c, 314d), chaque plot de montage étant couplé à un point équidistant respectif d'une barre en T disposée le long de la deuxième dimension à partir du point axial.

11. Le scanner MEMS (302) pour une imprimante laser selon la Revendication 10, où le premier bras de torsion (306a) est couplé à la première barre en T (312a) avec un premier et un deuxième filets elliptiques au niveau du point de couplage.

12. Le scanner MEMS (302) pour une imprimante laser selon la Revendication 11, où les premier et deuxième filets elliptiques possèdent une dimension de 400 micromètres le long du bras de torsion (306a) et de 200 micromètres le long de la barre en T (312a).

13. Le scanner MEMS (302) pour une imprimante laser selon la Revendication 10, où les points latéraux équidistants des barres en T (312a, 312b) sont décalés vers la plaque de balayage en silicium (304) dans la première direction en comparaison du point distal des bras de torsion (306a, 306b).

14. Le scanner MEMS (302) pour une imprimante laser selon la Revendication 10, comprenant en outre au moins un actionneur piézo-électrique empilé (602a) soutenant au moins un plot de montage (314a).

15. Le scanner MEMS (302) pour une imprimante laser selon la Revendication 14, où le au moins un actionneur piézo-électrique empilé (602a) comprend deux actionneurs piézo-électriques empilés (602a, 602b), chacun d'eux soutenant un plot de montage respectif (314a, 314b).

16. Le scanner MEMS (302) pour une imprimante laser selon la Revendication 14, où le au moins un actionneur piézo-électrique empilé (602a) comprend quatre actionneurs piézo-électriques empilés (602a, 602b, 602c, 602c), chacun d'eux soutenant un plot de montage respectif (314a, 314b, 314c, 314d).

17. Le scanner MEMS (302) pour une imprimante laser selon la Revendication 10, comprenant en outre :
un logement (802) auquel les premier, deuxième, troisième et quatrième plots de montage (314a, 314b, 314c, 314d) sont fixés.

18. Le scanner MEMS (302) selon la Revendication 17, où :
les troisième et quatrième plots de montage (314c, 314d) sont fixés directement au logement (802),
les premier et deuxième plots de montage (314a, 314b) sont fixés à un premier et un deuxième actionneurs piézo-électriques empilés respectifs (602a, 602a), et
les premier et deuxième actionneurs piézo-électriques empilés (602a, 602b) sont maintenus en contact avec le logement (802).

19. Le scanner MEMS (302) selon la Revendication 17, où les premier, deuxième, troisième et quatrième plots de montage (314a, 314b, 314c, 314d) sont fixés à des premier, deuxième, troisième et quatrième actionneurs piézo-électriques empilés respectifs (602a, 602b), et
les premier, deuxième, troisième et quatrième actionneurs piézo-électriques (602a, 602b) sont maintenus en contact avec le logement (802).

20. Le scanner MEMS (302) selon la Revendication 19, où les premier, deuxième, troisième et quatrième plots de montage (314a, 314b, 314c, 314d) sont fixés aux premier, deuxième, troisième et quatrième actionneurs piézo-électriques empilés respectifs (602a, 602b) de façon à exercer une force de compression préchargée sur les actionneurs piézo-électriques empilés respectifs (602a, 602b).

21. Le scanner MEMS (302) pour une imprimante laser selon la Revendication 17, comprenant en outre une unité d'exposition d'imprimante laser (106) sur laquelle le logement est monté.

22. Le scanner MEMS (302) pour une imprimante laser selon la Revendication 1, où la plaque de balayage (304) est conçue de façon à pivoter en va-et-vient périodiquement autour de l'axe de rotation (310) défini par les premier et deuxième bras de torsion (306a, 306b) à une fréquence supérieure à 1 kHz.

23. Le scanner MEMS (302) pour une imprimante laser selon la Revendication 22, où la plaque de balayage (304) est conçue de façon à pivoter en va-et-vient périodiquement autour de l'axe de rotation (310) défini par les premier et deuxième bras de torsion (306a, 306b) à une fréquence de 5 kHz.

24. Le scanner MEMS (302) pour une imprimante laser selon la Revendication 1, où la plaque de balayage (304) est conçue de façon à pivoter en va-et-vient périodiquement autour de l'axe de rotation (310) défini par les premier et deuxième bras de torsion (306a, 306b) vers un mouvement de rotation supérieur à un angle de balayage mécanique de zéro à crête de 10 degrés.

25. Le scanner MEMS (302) pour une imprimante laser selon la Revendication 24, où la plaque de balayage (304) est conçue de façon à pivoter en va-et-vient périodiquement autour de l'axe de rotation (310) défini par les premier et deuxième bras de torsion (306a, 306b) vers un mouvement de rotation d'un angle de balayage mécanique de zéro à crête de 20 degrés.

26. Le scanner MEMS (302) pour une imprimante laser selon la Revendication 1, où les première et deuxième tiges de suspension (308a, 308b) possèdent chacune une première dimension inférieure à la première dimension de la plaque de balayage en silicium (304).

27. Le scanner MEMS (302) pour une imprimante laser selon la Revendication 1, où le scanner MEMS (302) est formé photolithographiquement à partir d'une plaquette de silicium (502).

28. Le scanner MEMS (302) pour une imprimante laser selon la Revendication 1, où la plaque de balayage en silicium (304), les premier et deuxième bras de torsion opposés (306a, 306b) et les première (312a, 314a, 314b) et deuxième (312b, 314c, 314d) structures de montage opposées sont formés avec une épaisseur constante correspondant à l'épaisseur d'une plaquette de silicium (502).

29. Le scanner MEMS (302) pour une imprimante laser selon la Revendication 1, comprenant en outre :
un miroir formé sur une surface de la plaque de balayage en silicium (304).

30. Le scanner MEMS (302) pour une imprimante laser selon la Revendication 29, où le miroir possède une réflectivité supérieure à 90% à une longueur d'onde de 650 nanomètres.

31. Le scanner MEMS (302) pour une imprimante laser selon la Revendication 30, où le miroir possède une réflectivité supérieure à 95% à une longueur d'onde de 650 nanomètres.

32. Le scanner MEMS (302) pour une imprimante laser selon la Revendication 1, comprenant en outre un premier et un deuxième fils de dispositif de chauffage couplés fonctionnellement aux première (312a, 314a, 314b) et deuxième (312b, 314c, 314d) structures de montage opposées respectives.

33. Le scanner MEMS (302) pour une imprimante laser selon la Revendication 32, où les premier et deuxième fils de dispositif de chauffage sont conçus de façon à créer un potentiel électrique sur les premier et deuxième bras de torsion (306a, 306b).

34. Le scanner MEMS (302) pour une imprimante laser selon la Revendication 33, où les premier et deuxième fils de dispositif de chauffage sont conçus de façon à induire un chauffage par effet Joule à l'intérieur des premier et deuxième bras de torsion (306a, 306b).

35. Un procédé d'actionnement d'une imprimante laser, comprenant :
la modulation d'un laser (202) avec des données d'image de façon à produire un faisceau laser modulé,
la mise en forme du faisceau laser modulé de façon à produire un faisceau laser modulé mis en forme,
la déflexion périodique du faisceau laser modulé mis en forme de façon à produire un faisceau laser modulé mis en forme balayé, et
l'alignement du faisceau laser modulé mis en forme balayé de façon à empiéter sur un photoconducteur pivotant (102) destiné à produire une image électrostatique latente correspondant aux données vidéo sur le photoconducteur,
où la déflexion périodique du faisceau laser modulé mis en forme est exécutée par le scanner MEMS (302) selon l'une quelconque des Revendications 1 à 34.

36. Une imprimante électrophotographique, comprenant :
un photoconducteur (102) conçu de façon à, en succession, recevoir une charge statique, recevoir une lumière modulée destinée à former une image électrostatique latente, recevoir du toner dans un motif correspondant à l'image électrostatique latente et transférer le toner vers un rouleau de réception, et
une unité d'exposition (106) conçue de façon à fournir une lumière modulée au photoconducteur (102), l'unité d'exposition comprenant :
une source de lumière (202) réactive à un signal modulé,
des optiques de mise en forme de faisceau (204) alignées de façon à recevoir de la lumière provenant de la source de lumière et à produire un faisceau de lumière mis en forme, et
le scanner MEMS (302) selon l'une quelconque des Revendications 1 à 34.

37. L'utilisation d'un scanner MEMS (302) selon l'une quelconque des Revendications 1 à 34 dans une imprimante électrophotographique, l'imprimante électrophotographique comprenant :
un photoconducteur (102) conçu de façon à, en succession, recevoir une charge statique, recevoir une lumière modulée de façon à former une image électrostatique latente, recevoir du toner dans un motif correspondant à l'image électrostatique latente et transférer le toner vers un rouleau de réception, et
une unité d'exposition (106) conçue de façon à fournir une lumière modulée au photoconducteur (102), l'unité d'exposition comprenant :
une source de lumière (202) réactive à un signal modulé,
des optiques de mise en forme de faisceau (204) alignées de façon à recevoir de la lumière provenant de la source de lumière et à produire un faisceau de lumière mis en forme, et
le scanner MEMS (302) aligné de façon à recevoir le faisceau de lumière mis en forme et conçu de façon à balayer périodiquement la lumière sur le photoconducteur (102).
